(19) Europäisches Patentamt
European Patent Office
Office européen des brevets

(11) EP 0 505 869 B1

(12) EUROPÄISCHE PATENTSCHRIFT

(45) Veröffentlichungstag und Bekanntmachung des Hinweises auf die Patenterteilung:
**10.09.1997 Patentblatt 1997/37**

(51) Int Cl.[6]: **C08L 69/00**, C08K 5/54, C08K 5/15
// (C08L69/00, 83:04)

(21) Anmeldenummer: **92104476.4**

(22) Anmeldetag: **16.03.1992**

# (54) Stabilisierung von hochwärmeformbeständigem Polycarbonat

Stabilization of high-temperature deformation resistant polycarbonate

Stabilisation de polycarbonate résistante à la déformation à haute température

(84) Benannte Vertragsstaaten:
**BE DE FR GB IT NL**

(30) Priorität: **26.03.1991 DE 4109810**
**07.06.1991 DE 4118705**

(43) Veröffentlichungstag der Anmeldung:
**30.09.1992 Patentblatt 1992/40**

(73) Patentinhaber: **BAYER AG**
**51368 Leverkusen (DE)**

(72) Erfinder:
- **Meier, Helmut-Martin, Dr.**
  **W-4030 Ratingen (DE)**
- **Westeppe, Uwe, Dr.**
  **W-4020 Mettmann (DE)**
- **Dhein, Rolf, Dr.**
  **W-4150 Krefeld (DE)**
- **Freitag, Dieter, Dr.**
  **W-4150 Krefeld (DE)**
- **Constant, Dieter, Dr.**
  **W-5090 Leverkusen 3 (DE)**

(56) Entgegenhaltungen:
**EP-A- 0 392 252**
**DE-A- 2 853 882**
**FR-A- 2 413 437**
**GB-A- 2 057 464**

- **PATENT ABSTRACTS OF JAPAN, Band 11, Nr. 379 (C-463)(2826), 10. Dezember 1987**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 505 869 B1

Printed by Jouve, 75001 PARIS (FR)

## Beschreibung

Gegenstand der vorliegenden Erfindung sind hochwärmeformbeständige, aromatische Polycarbonate mit Molekulargewichten $\overline{M}w$ (Gewichtsmittel) von mindestens 10.000, vorzugsweise von 10.000 bis 200.000 und insbesondere von 20.000 bis 80.000, die bifunktionelle Carbonatstruktureinheiten der Formel (Ia)

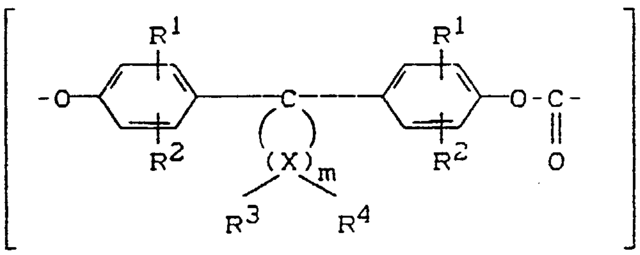

(Ia)

enthalten, worin

| | |
|---|---|
| $R^1$ und $R^2$ | unabhängig voneinander Wasserstoff, Halogen, bevorzugt Chlor oder Brom, $C_1$-$C_8$-Alkyl, $C_5$-$C_6$-Cycloalkyl, $C_6$-$C_{10}$-Aryl, bevorzugt Phenyl und $C_7$-$C_{12}$-Aralkyl, bevorzugt Phenyl-$C_1$-$C_4$-Alkyl, insbesondere Benzyl, |
| m | eine ganze Zahl von 4 bis 7, bevorzugt 4 oder 5, |
| $R^3$ und $R^4$, | für jedes X individuell wählbar, unabhängig voneinander Wasserstoff, $C_1$-$C_6$-Alkyl und |
| X | Kohlenstoff bedeuten, |

mit der Maßgabe, daß an mindestens einem Atom X $R^3$ und $R^4$ gleichzeitig Alkyl bedeuten,
die 0,001 bis 1 Gew.-%, bevorzugt 0,01 bis 0,5 Gew.-% mindestens eines Siloxans der Formel (II)

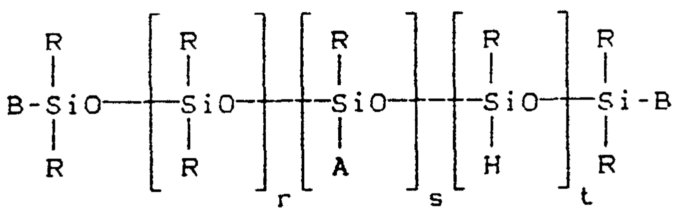

(II),

worin

R: Wasserstoff, $C_1$-$C_{20}$-Alkyl, $C_6$-$C_{10}$-Aryl, $C_1$-$C_{10}$-Alkoxy,
B: R oder A,
r: Null oder eine ganze Zahl von 1 bis 200
s: Null oder eine ganze Zahl von 1 bis 200 und
t: Null oder eine ganze Zahl von 1 bis 200 sind,

und/oder der Formel (III)

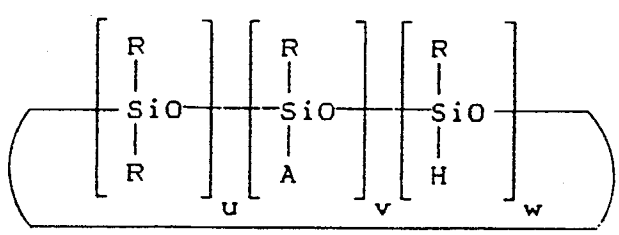

(III),

worin

R: wie oben für Formel (II)
u: eine ganze Zahl von 1 bis 20,
v: Null oder eine ganze Zahl von 1 bis 20,
w: Null oder eine ganze Zahl von 1 bis 20 und

$u + v + w \geq 3$ sind und worin

A: ein $C_1$-$C_{20}$-Alkyl oder $C_6$-$C_{10}$-Arylrest, der gegebenenfalls Heteroatome, Epoxy- oder Oxetangruppierungen aufweist, ist,
gegebenenfalls in Mischungen mit Oxetanen und/oder Epoxiden, enthalten.

Gegenstand der vorliegenden Erfindung ist außerdem die Verwendung der Siloxane der Formeln (II) und/oder (III) zur Langzeit-Hitze-Stabilisierung der Schlagzähigkeit von hochwärmeformbeständigen Polycarbonaten auf Basis der Struktureinheiten der Formel (Ia).

Die Siloxane der Formel (II) und der Formel (III) können sowohl einzeln als auch als Gemische mit sich selbst und untereinander eingesetzt werden.

Geeignete Siloxane der Formel (II) sind z.B. Polysiloxane mit folgenden Parametern

R = Wasserstoff, Methyl, Ethyl, Propyl, Butyl, Octyl, Isooctyl, 2-Ethylhexyl, Phenyl, Naphthyl,
B = R oder A,
r = 0-100,
s = 0-100,
t= 0-100.

Besonders geeignete Siloxane der Formel (II) sind solche mit

R = $CH_3$, $C_6H_5$,
B = R,
r = 0-50,
s= 0-50,
t= 0-50,
A = γ-Glycidoxypropyl, 4,5-Epoxypentyl, γ-Glycidoxybutyl, γ-Glycidoxyhexyl, γ-Glycidoxyoctyl, Glycidoxy-o,p-phenyl, 5,6-Epoxyhexyl, 7,8-Epoxyoctyl, 9,10-Epoxydecyl, β-3,4-(Epoxycyclohexyl)-ethyl, β-3,4-(Epoxycyclohexyl)-propyl, Oxiranyl sowie Reste der Struktur

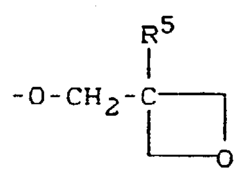

mit

$R^5$ = Wasserstoff, Methyl, Ethyl, Pentyl, Hexadecyl, Octadecyl, Cyclohexyl, Phenyl, p-Tolyl, Benzyl, Methoxymethyl, Ethoxymethyl, Octadecyloxymethyl, Phenoxymethyl, p-Tolyloxymethyl, Benzyloxymethyl, Phenoxy, p-Chlorphenoxy, p-tert.-Butylphenoxy und Acetyloxymethyl.

Besonders geeeignete Siloxane der Formel (II) sind auch solche mit
R = $CH_3$, $C_6H_5$, r = 0-50, s = 0, t = 0 und B = R sowie mit R = $CH_3$, $C_6H_5$, r = 0, s = 0, t = 0-50 und B = R.

Geeignete Siloxane der Formel (III) sind z.B. cyclische Siloxane mit folgenden Parametern

R = Methyl, Ethyl, Propyl, Butyl, Octyl, Isooctyl, 2-Ethylhexyl, Phenyl, Naphthyl
u = 1-10,
v = 0-10,
w = 0-10 und
u + v + w von 3-10 und mit A = R oder die Bedeutung von

A = γ-Glycidoxypropyl, 4,5-Epoxypentyl, γ-Glycidoxybutyl, γ-Glycidoxyhexyl, γ-Glycidoxyoctyl, Glycidoxy-o, p-phenyl, 5,6-Epoxyhexyl, 7,8-Epoxyoctyl, 9,10-Epoxydecyl, β-3,4-(Epoxycyclohexyl)-ethyl, β-3,4-(Epoxycyclohexyl)-propyl, Oxiranyl sowie Reste der Struktur

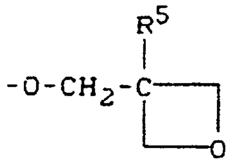 mit

$R^5$ = Wasserstoff, Methyl, Ethyl, Pentyl, Hexadecyl, Octadecyl, Cyclohexyl, Phenyl, p-Tolyl, Benzyl, Methoxymethyl, Ethoxymethyl, Octadecyloxymethyl, Phenoxymethyl, p-Tolyloxymethyl, Benzyloxymethyl, Phenoxy, p-Chlorphenoxy, p-tert.-Butylphenoxy und Acetyloxymethyl.

Besonders geeignete cyclische Siloxane der Formel (III) haben die Parameter

R = $CH_3$, $C_6H_5$, u = 1-10, v = 0, w = 0,
R = $CH_3$, $C_6H_5$, u = 1-10, v = 0, w = 0-10 und
u + v + w von 3-10 und A = R oder die Bedeutung von
A = γ-Glycidoxypropyl, 4,5-Epoxypentyl, γ-Glycidoxybutyl, γ-Glycidoxyhexyl, γ-Glycidoxyoctyl, Glycidoxy-o, p-phenyl, 5,6-Epoxyhexyl, 7,8-Epoxyoctyl, 9,10-Epoxydecyl, β-3,4-(Epoxycyclohexyl)-ethyl, β-3,4-(Epoxycyclohexyl)-propyl, Oxiranyl sowie Reste der Struktur

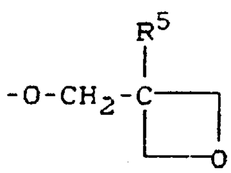 mit

$R^5$ = Wasserstoff, Methyl, Ethyl, Pentyl, Hexadecyl, Octadecyl, Cyclohexyl, Phenyl, p-Tolyl, Benzyl, Methoxymethyl, Ethoxymethyl, Octadecyloxymethyl, Phenoxymethyl, p-Tolyloxymethyl, Benzyloxymethyl, Phenoxy, p-Chlorphenoxy, p-tert.-Butylphenoxy und Acetyloxymethyl.

Die Herstellung der erfindungsgemäß einzusetzenden Verbindungen der Formeln (II) und (III) sind bekannt und allgemein beschrieben in W. Noll, Chemie und Technologie der Silicone, Verlag Chemie, Weinheim 1968.

Geeignete Oxetan- oder Epoxidverbindungen, mit denen die Siloxane der Formeln (II) und (III) abgemischt werden können, sind folgende Verbindungen:

α) 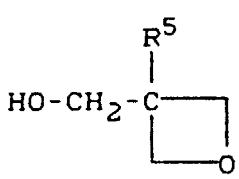

mit der Bedeutung von $R^5$ wie oben angegeben,

β) 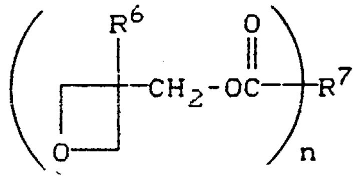

worin

$R^6$ $C_1$-$C_{16}$-Alkyl und $R^7$ entweder ein n-bindiges $C_2$-$C_8$-Alkan, das noch durch OH-Gruppen substituiert sein kann, wobei n eine Zahl von 1-6 ist oder ein 2-bindiges Cycloalkan, wobei n = 2 ist, sind und

γ) 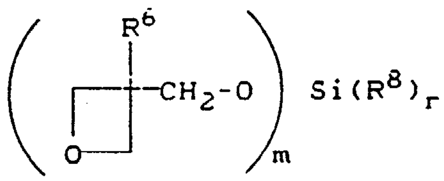

worin

$R^6$ $C_1$-$C_{16}$-Alkyl und $R^8$ $C_1$-$C_4$-Alkyl, das gegebenenfalls durch Cyan, Carboxy oder Acetoxy substituiert sein kann, Allyl, $C_6$-$C_{14}$-Aryl, das gegebenenfalls alkylsubstituiert ist, $C_7$-$C_{14}$-Aralkyl oder $C_1$-$C_4$-Alkoxy, das gegebenenfalls durch $C_1$-$C_4$-Alkoxy oder Allyloxy substituiert sein kann, m eine ganze Zahl von 1 bis 4 und r eine ganze Zahl von 0 bis 3, wobei m + r immer gleich 4 ist,

sowie epoxidgruppenhaltige Mischpolymere nach DOS 2 019 325, 3,4-Epoxycyclohexylmethyl-3,4-epoxycyclohexancarboxylat und Bis-(3,4-epoxycyclohexyl)-adipat.

Die Polycarbonate auf Basis der Carbonatstruktureinheiten der Formel (Ia) sind aus den DE-OS 3 832 396 bekannt. Es sind Homopolycarbonate und Copolycarbonate die die Strukturen der Formel (Ia) in Mengen von 100 Mol-% bis 2 Mol-%, vorzugsweise in Mengen von 100 Mol-% bis 5 Mol-% und insbesondere in Mengen von 100 Mol-% bis 10 Mol-% und ganz besonders 100 Mol-% bis 20 Mol-%, bezogen jeweils auf die Gesamtmenge von 100 Mol-% an difunktionellen Carbonatstruktureinheiten, im Polycarbonat enthalten.

In der Formel (Ia) sind bevorzugt an 1 - 2 Atomen X, insbesondere nur an einem Atom X, $R^3$ und $R^4$ gleichzeitig Alkyl. Bevorzugter Alkylrest ist Methyl; die X-Atome in α-Stellung zu dem di-phenyl-substituierten C-Atom (C-1) sind bevorzugt nicht dialkylsubstituiert, dagegen ist die Alkyldisubstitution in β-Stellung zu C-1 bevorzugt.

Insbesondere sind Struktureinheiten der Formel (Ia) die Reste von Dihydroxydiphenylcycloalkanen mit 5 und 6-Ring-C-Atomen im cycloaliphatischen Rest wie

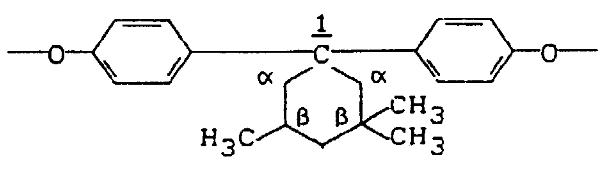

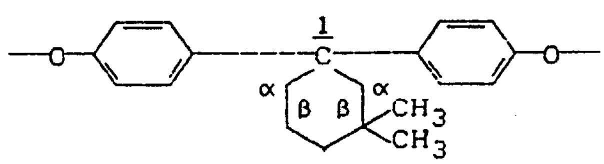

und

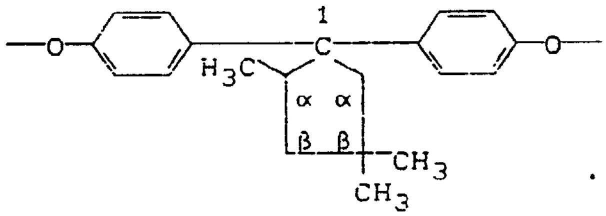

Diese Polycarbonate enthalten somit jeweils zu 100 Mol-% komplementäre Mengen an anderen difunktionellen Carbonatstuktureinheiten, beispielsweise solchen der Formel (Ib)

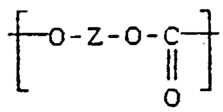

(Ib),

in denen

Z  ein aromatischer Rest mit 6 - 30 C-Atomen ist,

also in Mengen von 0 Mol-% (einschließlich) bis 98 Mol-% einschließlich, vorzugsweise von 0 Mol-% bis 95 Mol-% und insbesondere von 0 Mol-% bis 90 Mol-% und ganz besonders bevorzugt 0 Mol-% bis 80 Mol-%, bezogen jeweils auf die Gesamtmenge von 100 Mol-% an difunktionellen Carbonatstruktureinheiten, im Polycarbonat.

Bevorzugt sind Polycarbonate, in denen die Struktureinheiten der Formel (Ia) solche der Formel (Ic) sind

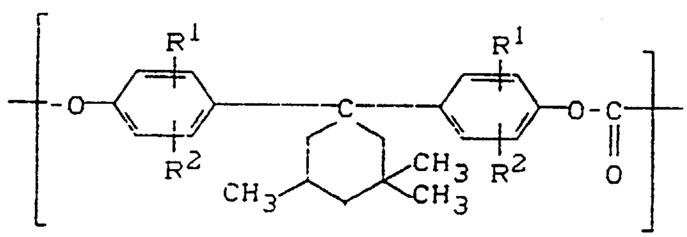

(Ic),

worin

$R^1$ und $R^2$ die für Formel (Ia) genannte Bedeutung haben, besonders bevorzugt aber Wasserstoff sind.

Die erfindungsgemäßen Mischungen sind gegen thermischen Abbau mit guter Langzeitwirkung stabilisiert und weisen dabei verbesserte Schlagzähigkeiten auf.

Nach DOS 29 20 450 (Le A 19 566) sind monomere Siloxane in normalen Polycarbonaten bekannt. Nach DOS 28 32 342 sind oligomere Siloxane in normalen Polycarbonaten bekannt. Nach DOS 28 32 339 sind cyclische Siloxane in normalen Polycarbonaten bekannt. Nach DOS 23 27 014 (Le A 15 025) sind Silicium-Epoxid-haltige Vinylpolymerisate in gefüllten, normalen Polycarbonaten bekannt. Eine Verbesserung der Schlagzähigkeit während der Langzeitalterung wird hierbei nicht beobachtet.

Aus der DE-OS 2 518 287 (Le A 16 254) sind glasfaserverstärkte Polycarbonate mit verbesserten mechanischen Eigenschaften bekannt, die durch den Zusatz von Organopolysiloxanen erzielt werden. Als Polycarbonate sind solche mit Strukturformeln (Ia) nicht erwähnt.

Aus der DE-OS 2 920 451 (Le A 19 567) ist die Verwendung von organischen Siliciumverbindungen in Kombination mit Oxetanverbindungen, Dioxanen oder Tetrahydrofuranen zum Stabilisieren und Aufhellen von Polycarbonaten bekannt. Wiederum sind Polycarbonate mit Strukturformeln (Ia) nicht erwähnt.

Aus dem US-Patent 2 999 835 sind Mischungen von Polycarbonaten mit Organopolysiloxanen bekannt, die u.a. eine verbesserte Zähigkeit aufweisen. Derartige Mischungen weisen allerdings eine hohe Konzentration an Organopolysiloxanan auf, was zu trüben Formkörpern führt.

Schließlich sind aus der DE-OS 3 908 038 (Le A 26 235) Mischungen aus Polydiorganosiloxan-Polycarbonat-Blockcokondensaten mit Siloxanen und mit Pfropfpolymeren und/oder mit kautschukelastischen Polymerisaten bekannt. Derartige Mischungen haben erhöhte Benzinbeständigkeit und eine gute Tieftemperaturzähigkeit.

Die Einarbeitung der Siloxane der Formeln (II) und (III) in die Polycarbonate, gegebenenfalls zusammen mit Oxetanen und/oder Epoxiden erfolgt in Knetern oder Extrudern. In vielen Fällen können die Siloxane den genannten Polycarbonaten während der Herstellung oder auch schon den Ausgangsstoffen zugesetzt werden. Man kann die Siloxane auch den Lösungen der genannten Polycarbonate zugeben und die Lösungsmittel dann abdampfen.

Gegenstand der vorliegenden Erfindung ist somit auch ein Verfahren zur Herstellung der erfindungsgemäßen Polycarbonate, das dadurch gekennzeichnet ist, daß man die Siloxane der Formeln (II) und (III) in die Polycarbonate über Kneter oder Extruder einarbeitet, oder den Ausgangsstoffen während der Herstellung der Polycarbonate zusetzt, oder Lösungen der Polycarbonate zugibt und das Lösungsmittel abdampft, wobei gegebenenfalls Oxetane und/oder Epoxide mit eingearbeitet werden.

Es ist möglich, den Polycarbonaten die üblichen Zusatzstoffe vor, während oder nach dem Herstellungsprozeß zuzumischen. Als Zusatzstoffe seien beispielsweise erwähnt; Entformungsmittel, Farbstoffe, anorg. Pigmente, UV-Absorber, Flammschutzmittel, Stabilisatoren, Füllstoffe wie Glasfasern, Graphit, Metallpulver etc.

Die Verarbeitung der erfindungsgemäß modifizierten Polycarbonate auf Basis der Struktureinheiten der Formel (Ia) erfolgt beispielsweise auf Extrudern oder Knetern oder aus Lösung zu Formkörpern verschiedenster Art; beispielsweise zu Lampenfassungen, Hohlkammerplatten, Leuchtengehäuse, Schreibgeräte, Wasserbehälter, Brillen, Babyflaschen, Folien.

Die erfindungsgemäßen Polycarbonate sind als Formkörper überall dort einsetzbar, wo die bislang bekannten Polycarbonate eingesetzt wurden, also im Elektrosektor sowie im Bausektor für Abdeckungen und Verglasungen, und zwar dann, wenn erhöhte Wärmeformbeständigkeit bei gleichzeitig guter Verarbeitbarkeit, also wenn komplizierte Bauteile hoher Wärmeformbeständigkeit verlangt werden.

Beispiele

Untersucht wurde ein Copolycarbonat auf Basis von 1,1-Bis-(4-hydroxyphenyl)-3,3,5-trimethylcyclohexan und 2,2-(4-Hydroxyphenyl)-propan in den Molverhältnissen 36:65 mit einer relativen Lösungsviskosität von 1,295 (gemessen in Methylenchlorid bei 25°C und einer Konzentration von 0,5 g/100 ml).

Alterungsversuche

Die Normkleinstäbe aus Polycarbonat gemäß Versuche A-C wurden bei 150°C einer Heißluftalterung unterzogen. Die Transmission wurde nach ASTM 1003, der Yellownessindex nach ASTI D 1925, die Schlagzähigkeit nach DIN 53 453 bestimmt.

Erfindungsgemäße Versuche

Das o.g. Copolycarbonat enthielt als Additiv

A: 0,1 Gew.-% eines Polysiloxans der Formel II, worin

R = $CH_3$, B = $CH_3$,

A = 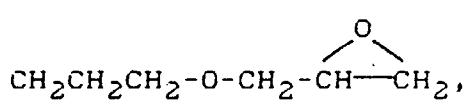

r = 0-40, s = 0-40, t = 0-40 bedeuten,

B: 0,1 Gew.-% einer 1:1 Mischung aus

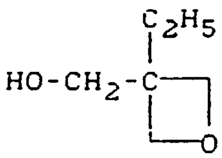

und

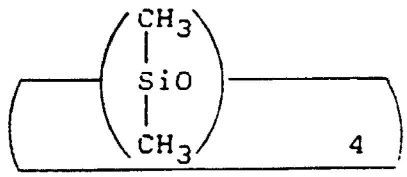

Vergleich

C: Das o.g. Copolycarbonat enthielt kein Additiv. Es wurde einmal reextrudiert. Dadurch wurde sichergestellt, daß die gleichen Verarbeitungsschritte wie in A und B durchgeführt werden.

Versuch D

Das obengenannte Copolycarbonat enthielt als Additiv 0,03 Gew.-% des Siloxans der folgenden Formel

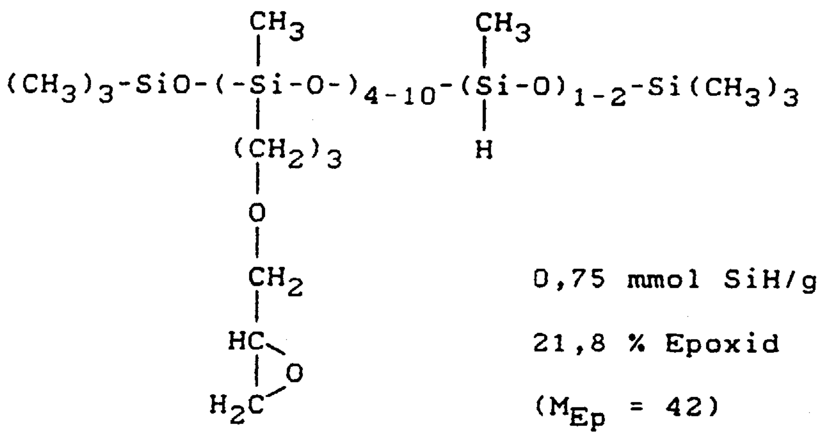

0,75 mmol SiH/g

21,8 % Epoxid

($M_{Ep}$ = 42)

Dieses Siloxan ist hergestellt aus dem entsprechenden Methylhydrogenpolysiloxan durch Umsetzung mit Allylglycidylether nach DAS 1 272 550.

Die Einarbeitung in das Copolycarbonat erfolgt über den Extruder.

Aus dem additivhaltigen Copolycarbonat wurde ein Normkleinstab hergestellt.

Versuch E

Das obengenannte Copolycarbonat enthielt als Additive 0,03 Gew.-% des Siloxans gemäß Versuch D sowie 0,3 Gew.-% UV-Stabilisator der Formel

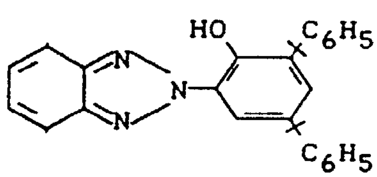

Die Einarbeitung der Additive in das Copolycarbonat erfolgt über den Extruder.

Aus dem additivhaltigen Copolycarbonat wurde ein Normkleinstab hergestellt.

| Ergebnisse | | | | | | |
|---|---|---|---|---|---|---|
| | A | | B | | C | |
| % Transmission | | | | | | |
| 0 Std. | 88,6 | | 89,4 | | 89,8 | |
| 250 | 86,9 | | 87,7 | | 86,2 | |
| 500 | 86,0 | | 86,0 | | 84,9 | |
| 750 | 85,1 | | 84,9 | | 83,1 | |
| 1000 | 85,4 | | 84,6 | | 82,2 | |
| 1250 | 84,3 | | 83,5 | | 81,1 | |
| Y.I. | | | | | | |
| 0 Std. | 7,8 | | 8,2 | | 9,4 | |
| 250 | 13,1 | | 12,3 | | 14,9 | |
| 500 | 17,0 | | 17,2 | | 19,2 | |
| 750 | 21,0 | | 21,7 | | 26,2 | |
| 1000 | 19,4 | | 21,0 | | 30,2 | |
| 1250 | 24,5 | | 25,4 | | 34,9 | |
| Schlagzähigkeit $a_n$ ($kJ/m^2$) | n.g. | Rest | n.g. | Rest | n.g. | Rest |
| 0 Std. | 10 | | 10 | | 10 | |
| 250 | 8 | 199 | 10 | | 2 | 193 |
| 500 | 9 | 244 | 9 | 119 | 4 | 174 |
| 750 | 9 | 205 | 8 | 235 | 5 | 77 |
| 1000 | 8 | 165 | 8 | 154 | | |
| 1250 | 8 | 113 | 8 | 180 | 1 | 96 |
| n.g. = nicht gebrochen<br>Rest = Restschlagzähigkeit | | | | | | |

**Patentansprüche**

1. Hochwärmeformbeständige, aromatische Polycarbonate mit Molekulargewichten $\overline{M}w$ (Gewichtsmittel) von mindestens 10.000, die bifunktionelle Carbonatstruktureinheiten der Formel (Ia)

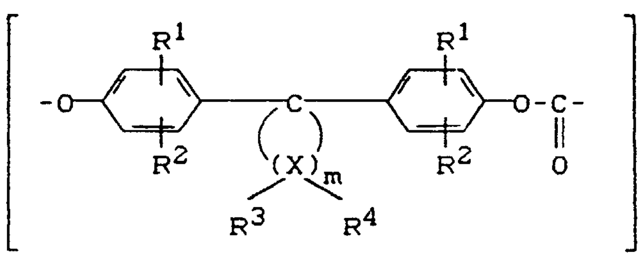

(Ia)

enthalten, worin

$R^1$ und $R^2$ unabhängig voneinander Wasserstoff, Halogen, $C_1$-$C_8$-Alkyl, $C_5$-$C_6$-Cycloalkyl, $C_6$-$C_{10}$-Aryl und $C_7$-$C_{12}$-Aralkyl,

m eine ganze Zahl von 4 bis 7,

$R^3$ und $R^4$, für jedes X individuell wählbar, unabhängig voneinander Wasserstoff, $C_1$-$C_6$-Alkyl und

X Kohlenstoff bedeuten,

mit der Maßgabe, daß an mindestens einem Atom X $R^3$ und $R^4$ gleichzeitig Alkyl bedeuten, die 0,001 bis 1 Gew.-% mindestens eines Siloxanes der Formel (II)

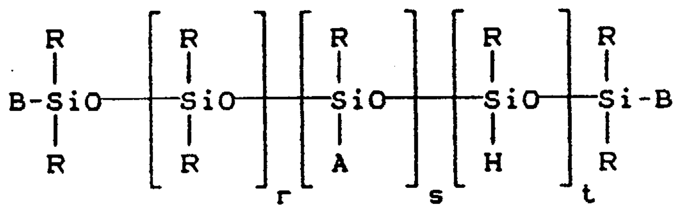

(II),

worin

R: Wasserstoff, $C_1$-$C_{20}$-Alkyl, $C_6$-$C_{10}$-Aryl, $C_1$-$C_{10}$-Alkoxy,
B: R oder A,
r: Null oder eine ganze Zahl von 1 bis 200,
s: Null oder eine ganze Zahl von 1 bis 200 und
t: Null oder eine ganze Zahl von 1 bis 200 sind

und/oder der Formel (III)

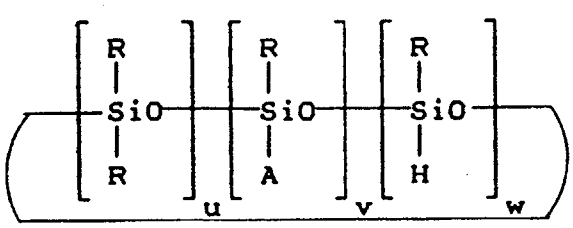

(III)

worin

R: $C_1$-$C_{20}$-Alkyl, $C_6$-$C_{10}$-Aryl, $C_1$-$C_{10}$-Alkoxy,
u: eine ganze Zahl von 1 bis 20
v: Null oder eine ganze Zahl von 1 bis 20,
w: Null oder eine ganze Zahl von 1 bis 20 und

$u + v + w \geq 3$ sind und worin

A: ein $C_1$-$C_{20}$-Alkyl oder $C_6$-$C_{10}$-Arylrest, der gegebenenfalls Heteroatome, Epoxy- oder Oxetangruppierungen aufweist, ist,

gegebenenfalls in Mischungen mit Oxetanen und/oder Epoxiden, enthalten.

**2.** Verwendung von 0.001-1% Gew. der Siloxane der Formeln (II) und/oder (III) zur Langzeit-Hitze-Stabilisierung der Schlagzähigkeit von hochwärmeformbeständigen Polycarbonaten auf Basis der Struktureinheiten der Formel (Ia).

3. Verfahren zur Herstellung der Polycarbonate des Anspruchs 1, dadurch gekennzeichnet, daß man die Siloxane der Formeln (II) und (III) in die Polycarbonate über Kneter oder Extruder einarbeitet oder den Ausgangsstoffen während der Herstellung der Polycarbonate zusetzt, oder Lösungen der Polycarbonate zugibt und das Lösungsmittel abdampft, wobei gegebenenfalls Oxetane und/oder Epoxide mit eingearbeitet werden.

## Claims

1. Aromatic polycarbonates resistant to deformation at elevated temperatures and having molecular weights $\overline{M}_w$ (weight average) of at least 10,000, containing bifunctional carbonate structural units corresponding to formula (Ia)

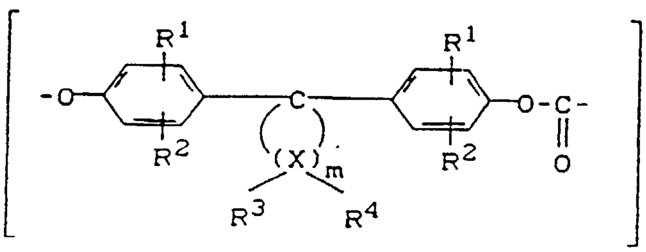

(Ia)

wherein

| | |
|---|---|
| $R^1$ and $R^2$ | independently of one another denote hydrogen, halogen, $C_1$-$C_8$ alkyl, $C_5$-$C_6$ cycloalkyl, $C_6$-$C_{10}$ aryl and $C_7$-$C_{12}$ aralkyl, |
| m | denotes an integer from 4 to 7, |
| $R^3$ and $R^4$ | are individually selectable for each X and independently of one another denote hydrogen, $C_1$-$C_6$ alkyl and |
| X | denotes carbon, |

with the proviso that on at least one X atom $R^3$ and $R^4$ simultaneously denote alkyl,
which contain from 0.001 to 1 wt.% of at least one siloxane corresponding to formula (II)

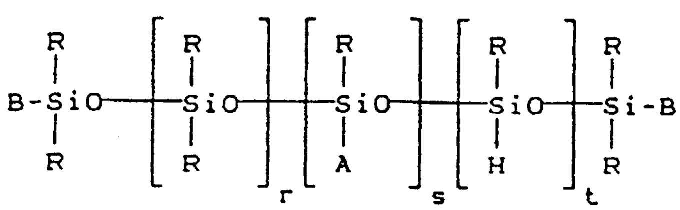

(II),

wherein

R: is hydrogen, $C_1$-$C_{20}$ alkyl, $C_6$-$C_{10}$ aryl, $C_1$-$C_{10}$ alkoxy,
B: is R or A,
r: is zero or an integer from 1 to 200
s: is zero or an integer from 1 to 200 and
t: is zero or an integer from 1 to 200

and/or corresponding to formula (III)

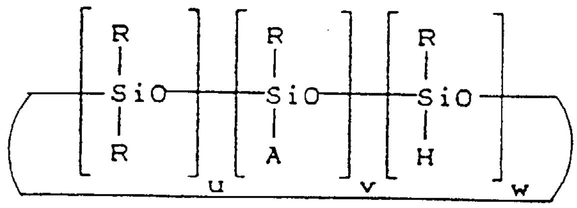

(III)

wherein

R: is $C_1$-$C_{20}$ alkyl, $C_6$-$C_{10}$ aryl, $C_1$-$C_{10}$ alkoxy,
u: is an integer from 1 to 20
v: is zero or an integer from 1 to 20
w: is zero or an integer from 1 to 20 and

$u + v + w \geq 3$ and wherein

A is a $C_1$-$C_{20}$ alkyl or $C_6$-$C_{10}$ aryl group optionally containing hetero atoms, epoxy groups or oxetane groups,

optionally as mixtures with oxetanes and/or epoxides.

**2.** The use of from 0.001 to 1 wt.% of the siloxanes corresponding to formula (II) and/or (III) for the long-term heat stabilisation of the impact strength of polycarbonates resistant to deformation at elevated temperatures and based on structural units corresponding to formula (Ia).

**3.** A process for the preparation of the polycarbonates according to claim 1, characterised in that the siloxanes corresponding to formulae (II) and (III) are incorporated into the polycarbonates by means of kneaders or extruders or added to the starting materials during the preparation of the polycarbonates, or added to solutions of the polycarbonates and the solvent is evaporated off, oxetanes and/or epoxides optionally being incorporated.

**Revendications**

**1.** Polycarbonates aromatiques manifestant une stabilité dimensionnelle élevée à la chaleur, possédant des poids moléculaires $\overline{M}w$ (moyenne en -poids) d'au moins 10.000, qui contiennent des unités de structure bifonctionnelles de carbonate de formule (Ia)

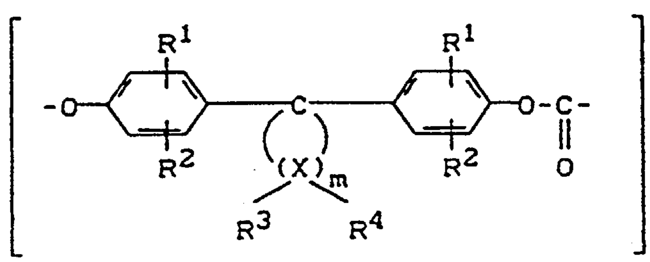

(Ia)

dans laquelle

$R^1$ et $R^2$ représentent, indépendamment l'un de l'autre, un atome d'hydrogène, un atome d'halogène, un groupe alkyle en $C_1$-$C_8$, un groupe cycloalkyle en $C_5$-$C_6$, un groupe aryle en $C_6$-$C_{10}$ et un groupe aralkyle en $C_7$-$C_{12}$,

m représente un nombre entier de 4 à 7,

$R^3$ et $R^4$, qui peuvent être sélectionnés de manière individuelle pour chaque atome X, représentent, indépendamment l'un de l'autre, un atome d'hydrogène, un groupe alkyle en $C_1$-$C_6$ et

X représente un atome de carbone,

avec cette mesure que, sur au moins un atome X, $R^3$ et $R^4$ représentent simultanément un groupe alkyle, qui contiennent, à concurrence de 0,001 à 1% en poids, au moins un siloxane répondant à la formule (II)

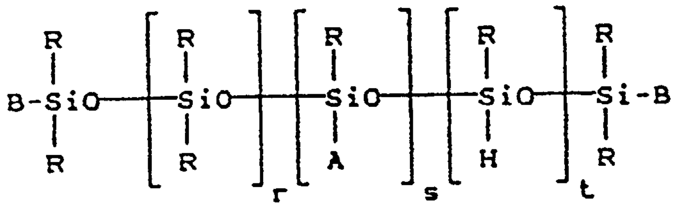 (II),

dans laquelle

R représente un atome d'hydrogène, un groupe alkyle en $C_1$-$C_{20}$, un groupe aryle en $C_6$-$C_{10}$, un groupe alcoxy en $C_1$-$C_{10}$,
B représente R ou A,
r représente zéro ou un nombre entier de 1 à 200,
s représente zéro ou un nombre entier de 1 à 200 et
t représente zéro ou un nombre entier de 1 à 200,

et/ou répondant à la formule (III)

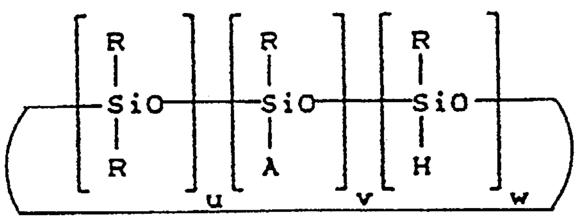 (III)

dans laquelle

R représente un groupe alkyle en $C_1$-$C_{20}$, un groupe aryle en $C_6$-$C_{10}$, un groupe alcoxy en $C_1$-$C_{10}$,
u représente un nombre entier de 1 à 20,
v représente zéro ou un nombre entier de 1 à 20,
w représente zéro ou un nombre entier de 1 à 20 et

$u + v + w \geq 3$, et dans lesquelles

A représente un radical alkyle en $C_1$-$C_{20}$ ou un radical aryle en $C_6$-$C_{10}$, qui présente éventuellement des hétéroatomes, des groupements époxy ou oxétane,

le cas échéant, en mélange avec des oxétanes et/ou des époxydes.

2. Utilisation, à concurrence de 0,001 à 1% en poids, des siloxanes répondant aux formules (II) et/ou (III) pour la stabilisation à la chaleur à long terme de la résistance élevée aux chocs de polycarbonates présentant une stabilité dimensionnelle élevée à la chaleur, à base des unités de structure de formule (Ia).

3. Procédé pour la préparation des polycarbonates selon la revendication 1, caractérisé en ce qu'on incorpore les

siloxanes répondant aux formules (II) et (III) dans les polycarbonates via des malaxeurs ou des extrudeuses ou bien on les ajoute aux substances de départ au cours de la préparation des polycarbonates, ou encore on les ajoute à des solutions des polycarbonates et on évapore le solvant, en incorporant le cas échéant de manière conjointe des oxétanes et/ou des époxydes.